(19) Europäisches Patentamt / European Patent Office / Office européen des brevets

(11) **EP 3 396 651 A1**

(12) **DEMANDE DE BREVET EUROPEEN**

(43) Date de publication:
**31.10.2018 Bulletin 2018/44**

(51) Int Cl.:
**G08G 5/00** (2006.01)    **G05D 1/10** (2006.01)
**G08G 5/04** (2006.01)

(21) Numéro de dépôt: **18164291.9**

(22) Date de dépôt: **27.03.2018**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **24.04.2017   FR 1753524**

(71) Demandeur: **Airbus Operations S.A.S.**
**31060 Toulouse (FR)**

(72) Inventeur: **ROBIN, Jean-Luc**
**31240 SAINT-JEAN (FR)**

(74) Mandataire: **Gicquel, Olivier Yves Gérard**
**Airbus Opérations (S.A.S)**
**XIF - M0101/1**
**316, route de Bayonne**
**31060 Toulouse Cedex (FR)**

(54) **PROCEDE DE TRANSMISSION DE PARAMETRES DE VOL D'UN AERONEF MENEUR VERS UN AERONEF INTRUS**

(57)    L'invention concerne un procédé de transmission de paramètres de vol d'un aéronef meneur (L) à au moins un aéronef intrus (I). Selon l'invention, la transmission est effectuée au moyen d'un système d'évitement de collision de type TCAS. Le transpondeur d'un aéronef meneur (L) est configuré pour mesurer le spectre d'un signal d'interrogation reçu d'un aéronef intrus (I) et pour comparer la puissance dudit spectre à une puissance seuil. Si la puissance du signal d'interrogation est supérieure ou égale à la puissance seuil, alors l'aéronef intrus (I) est éligible à recevoir des paramètres de vol de l'aéronef meneur afin de pouvoir calculer la position des centres ou la force de circulation de tourbillons de sillage (14L, 15L) générés par l'aéronef meneur (L).

L'échange de paramètres de vol de l'aéronef meneur uniquement vers des d'aéronefs intrus éligibles permet de ne pas dépasser la capacité maximale de la bande passante de la communication automatisée.

Fig. 4

EP 3 396 651 A1

**Description**

La présente invention concerne un procédé de transmission de paramètres de vol d'un aéronef, dit aéronef meneur, vers au moins un autre aéronef, dit aéronef intrus, afin que ledit/lesdits aéronefs intrus puissent calculer précisément les positions des centres et/ou la force de circulation des tourbillons de sillage générés par l'aéronef meneur.

Un aéronef en vol génère dans son sillage deux tourbillons de sillage (wake vortex en terminologie anglo-saxonne). A partir des ailes, les tourbillons tendent d'abord à se rapprocher l'un de l'autre, puis à maintenir une distance plus ou moins constante entre eux tout en perdant de l'altitude par rapport à l'altitude à laquelle ils ont été générés.

De manière connue, la position des centres ainsi que la force de circulations des tourbillons générés par un aéronef peuvent être calculées à partir de paramètres de vol de l'aéronef tels que la masse, l'altitude, l'angle de roulis, la configuration aérodynamique, l'envergure, la densité de l'air au point de vol, la vitesse, etc...

Il est intéressant pour un aéronef, dit intrus, de pouvoir calculer les positions des centres des tourbillons de sillage générés par un aéronef meneur, afin :

- de voler en formation derrière l'aéronef meneur en profitant au maximum des vents ascendants des tourbillons afin de réduire sa consommation de carburant ; ou
- d'éviter de subir des turbulences induites par les tourbillons.

Le calcul de la force de circulation d'un tourbillon de sillage généré par un aéronef meneur permet en outre à un aéronef suiveur de connaître la répartition de la force des vents ascendants par rapport au centre d'un tourbillon de sillage et donc permet à l'aéronef intrus de se placer de sorte à profiter efficacement dudit tourbillon.

A cet effet, l'invention concerne un procédé de transmission de paramètres de vol d'un aéronef meneur vers au moins un aéronef intrus tel que revendiqué dans la revendication 1.

L'un des avantages de l'invention est de limiter l'envoi de paramètres de vol de l'aéronef meneur à des aéronefs intrus (éligibles) se trouvant en deçà d'une certaine distance de l'aéronef meneur, cette distance étant liée à la puissance du signal d'interrogation que les aéronefs intrus émettent. Il est ainsi possible de transmettre un paramètre de vol de l'aéronef meneur à un aéronef intrus sans dépasser la capacité de la bande passante de la communication automatisée puisque seul un nombre restreint d'aéronefs est éligible à recevoir des paramètres de vol de l'aéronef meneur.

Les caractéristiques de l'invention mentionnées ci-dessus, ainsi que d'autres, apparaîtront plus clairement à la lecture de la description suivante d'exemples de réalisation, ladite description étant faite en relation avec les figures jointes :

- la figure 1 est une représentation schématique d'un aéronef selon l'invention comprenant une pluralité de systèmes embarqués permettant la mise en oeuvre d'un procédé de transmission de paramètres de vol selon l'invention, dont un système d'évitement de collision et un système de gestion de vol ;
- la figure 2 est une représentation schématique d'un détail des connexions entre le système de gestion et le système d'évitement de collision selon un mode de réalisation de l'invention, le système d'évitement de collision comprenant un transpondeur;
- la figure 3 est une représentation schématique sous forme de blocs logiques du transpondeur de la figure 2 selon un mode de réalisation de l'invention ;
- la figure 4 est une représentation schématique d'une formation de deux aéronefs tels qu'illustrés à la figure 1, dont un aéronef meneur générant des tourbillons de sillage et un aéronef intrus volant en formation dans le sillage de l'aéronef meneur ;
- la figure 5 est une vue similaire à la figure 4 dans laquelle l'aéronef intrus croise le sillage de l'aéronef meneur ;
- la figure 6 est une vue schématique des étapes du procédé de transmission de paramètres de vol entre un aéronef meneur et un aéronef intrus dans le cas de la figure 4 ou de la figure 5, selon un mode de réalisation l'invention ;
- la figure 7 est une représentation schématique sous forme de blocs logiques du transpondeur de la figure 2 selon un autre mode de réalisation de l'invention ;
- la figure 8 est une vue similaire à la figure 6 représentant les étapes d'un procédé de transmission de paramètres de vol selon un mode de réalisation de l'invention entre un aéronef meneur et un aéronef intrus dans le cas de la figure 4 ou de la figure 5.

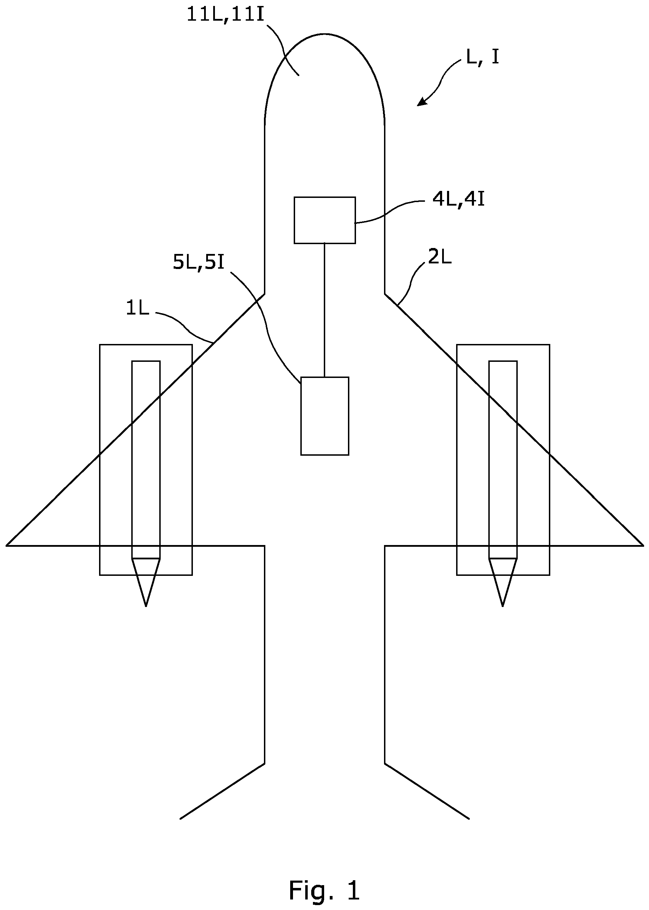

En relation avec la figure 1, un aéronef L, I comprend deux ailes 1L, 2L, et une pluralité de systèmes embarqués dans son fuselage 11L, 11I, dont un système de gestion de vol 4L, 4I de type FMS (flight management system : système de gestion de vol) et un système d'évitement de collision 5L, 5I connecté au système de gestion de vol 4L, 4I.

Le système de gestion de vol 4L, 4I compile des paramètres de vol de l'aéronef, à savoir: masse, altitude, angle de roulis, configuration aérodynamique, envergure, densité de l'air au point de vol, vitesse. Le système d'évitement de collision 5L, 5I est connecté au système de gestion de vol 4L, 4I duquel il reçoit les paramètres de vol de l'aéronef.

De manière connue, le système d'évitement de collision 5L, 5I avertit l'équipage de l'aéronef de probabilités de collisions avec d'autres aéronefs volant dans un volume de surveillance réparti autour (sur 360°) de l'aéronef et dont les dimensions sont dépendantes de la vitesse de l'aéronef L,I.

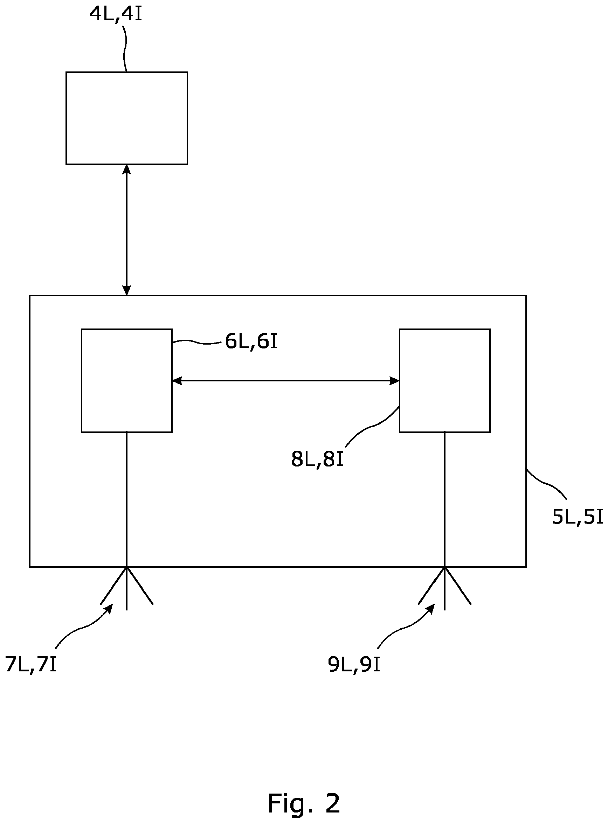

En référence avec la figure 2, le système d'évitement de collision est un dispositif actif de type TCAS (« Traffic Collision Avoidance System ») et comprend à ce titre :

- un interrogateur 6L, 6I, de type unité centrale, connecté à au moins une antenne directionnelle 7L, 7I, dite antenne d'interrogateur, montée sur l'aéronef ;
- un transpondeur 8L, 8I (ou XPDR en terminologie aéronautique), de type unité centrale, connecté à au moins une antenne 9L, 9I, par exemple omnidirectionnelle, dite antenne de transpondeur, montée sur l'aéronef.

Dans l'ensemble de la description, par unité centrale, on entend un dispositif comprenant au moins un processeur comprenant des circuits booléens ou logiques (portes logiques, comparateur), et des mémoires. Le processeur exécute des instructions contenues dans les mémoires de l'unité centrale.

Dans le principe de fonctionnement des dispositifs actifs de type TCAS, l'interrogateur 6I d'un aéronef I émet à une fréquence fixe de 1030 MHz et à intervalle réguliers (par exemple toutes les secondes) des signaux d'interrogations.

Le transpondeur 8L d'un autre aéronef L recevant un signal d'interrogation répond en transmettant un signal réponse à l'aéronef I émettant le signal d'interrogation. Le signal réponse contient les identifiants de l'aéronef meneur L et permet au système de gestion de vol 4I de l'aéronef intrus d'estimer, après analyse dudit signal, un temps de collision et de prendre des mesures pour éliminer tout risque de collision.

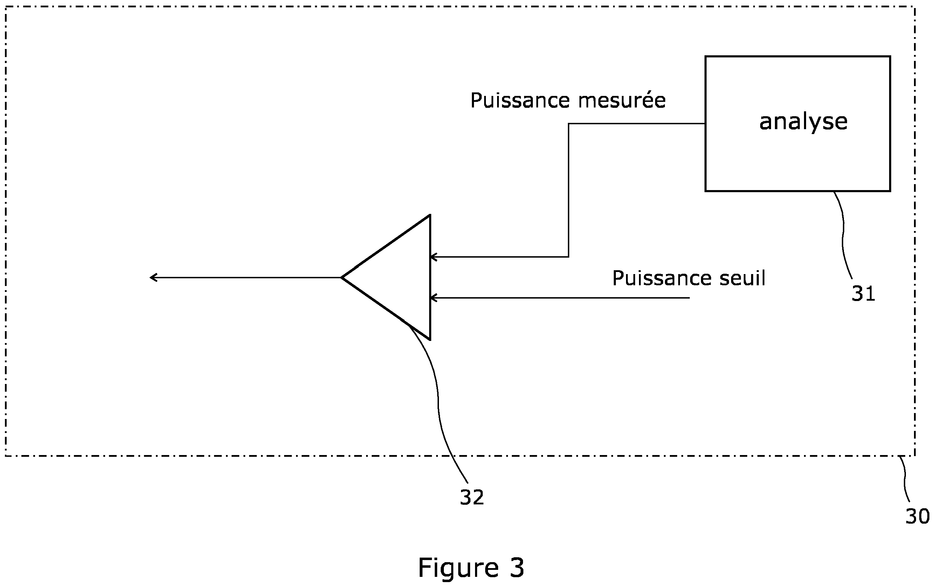

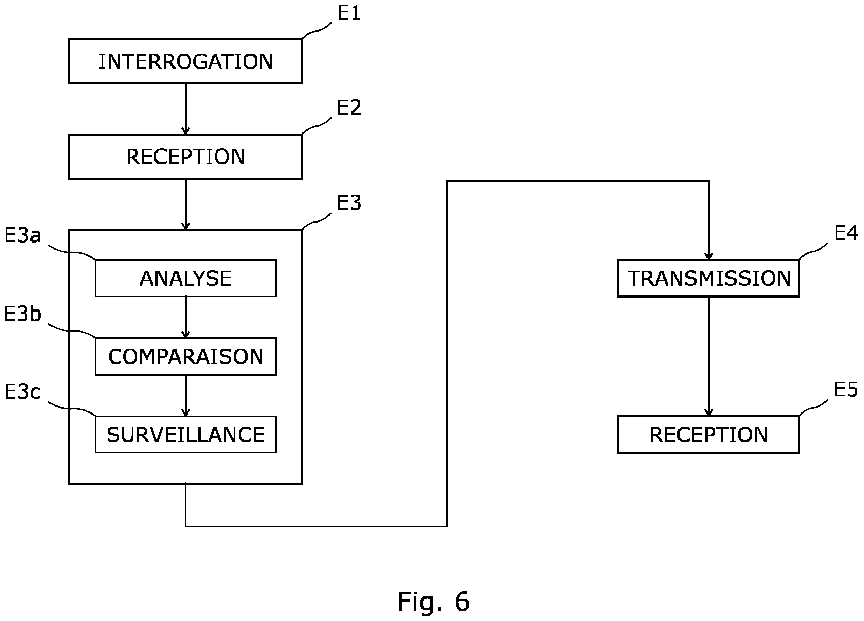

Le procédé selon l'invention va être explicité en relation avec les figures 3 à 6. On considère un aéronef L, dit aéronef meneur, générant au niveau de chacune de ses deux ailes 1L, 2L un tourbillon de sillage 14L, 15L (respectivement bâbord - tribord) et une pluralité d'aéronef intrus I volant dans le volume de surveillance de l'aéronef meneur L.

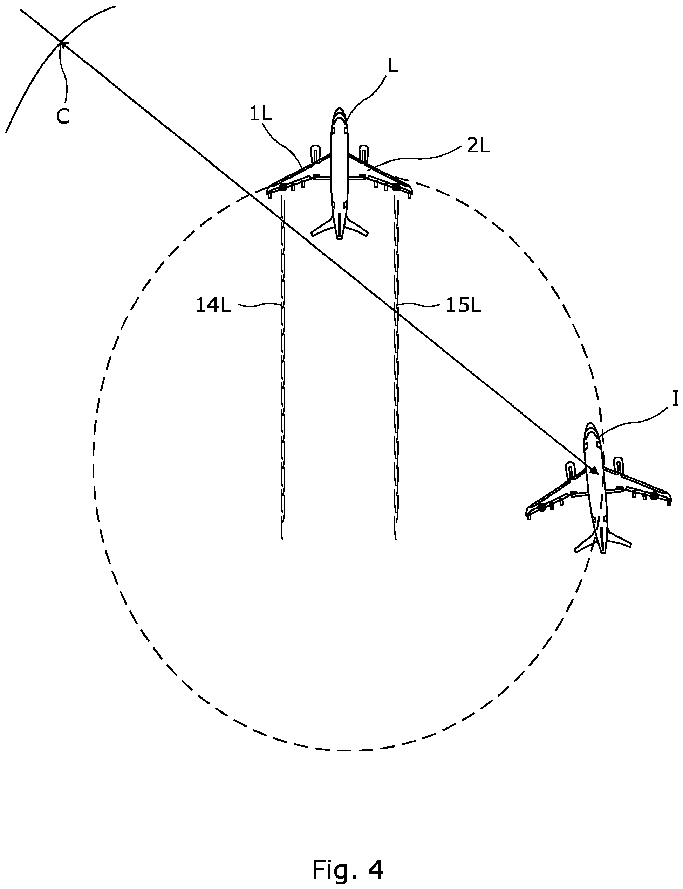

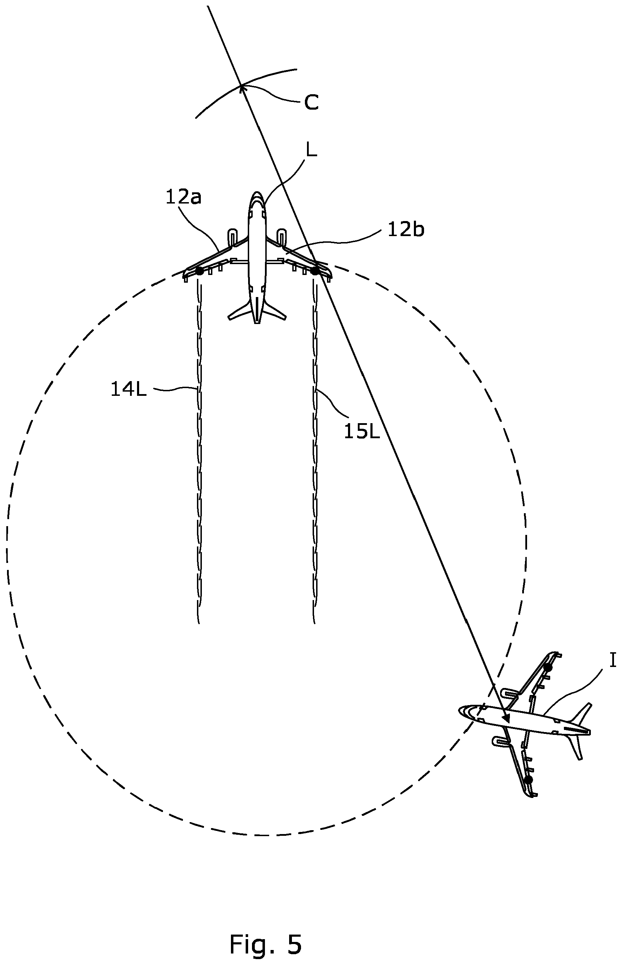

Un seul aéronef intrus I est représenté sur les figures 4 et 5 : un aéronef intrus I volant en formation derrière l'aéronef meneur L à la figure 4, ou, à la figure 5, un aéronef intrus I croisant le sillage de l'aéronef meneur L avec un cap sensiblement perpendiculaire à celui de l'aéronef meneur L.

Chacun des aéronefs meneur L ou intrus I est équipé tel que décrit plus haut. Les références sur les figures portent le suffixe L pour l'aéronef meneur, ou I pour l'aéronef intrus.

- dans une étape d'interrogation E1, l'interrogateur 6I de l'aéronef intrus émet périodiquement (par exemple toutes les 10 secondes, ou toutes les 30 secondes) via l'antenne d'interrogateur 7I, un signal d'interrogation, sur 1030 MHz par exemple, dans chacun des quatre segments d'azimut de 90°. Le signal d'interrogation émis contient l'adresse de l'aéronef intrus I et une demande d'au moins un paramètre de vol (demande formulée par le système de gestion de vol 4I) ;

- dans une étape de réception E2, le transpondeur 8L de l'aéronef meneur L, volant dans le volume de surveillance de l'aéronef intrus, reçoit le signal d'interrogation de l'aéronef intrus I via son antenne 9L ;

- dans une étape de détermination E3, le transpondeur 8L détermine si l'aéronef intrus I est éligible à recevoir un paramètre de vol de l'aéronef meneur L :

  • dans une sous-étape d'analyse E3a, le processeur 30 du transpondeur 8L, met en oeuvre un programme d'analyse de spectre de signal 31 enregistré dans les mémoires (non représentés) du transpondeur afin d'analyser le spectre du signal d'interrogation reçu de l'aéronef intrus I et de déterminer la puissance (à la fréquence d'émission de l'interrogateur 6I de l'aéronef intrus I) dudit signal;
  • dans une sous-étape de comparaison E3b, le transpondeur 8L de l'aéronef meneur compare, via un comparateur 32 du transpondeur 8L, la puissance du signal déterminée à la sous-étape précédente à une puissance seuil. Le signal de sortie du comparateur 32 passe d'un premier état à second état (par exemple, passe de l'état 0 à l'état 1) lorsque la puissance du signal d'interrogation reçu par l'aéronef meneur L est supérieure ou égale à la puissance seuil, et reste dans le premier étant sinon ;
  • dans une sous-étape de surveillance et de détermination E3c, le transpondeur 8L surveille le passage au second état du signal de sortie du comparateur 32 et détermine si l'aéronef intrus I est éligible ou non à recevoir le au moins un paramètre de vol demandé à l'étape d'interrogation E1 :

    ◦ l'aéronef intrus I est éligible si le transpondeur 8L a détecté un passage au second état du signal de sortie du comparateur 32 (puissance du signal d'interrogation supérieure ou égale à la puissance seuil) ;
    ◦ l'aéronef intrus I n'est pas éligible si le transpondeur 8L n'a pas détecté un passage au second état du signal de sortie du comparateur 32 (puissance du signal d'interrogation inférieure à la puissance seuil) ;

Puisque la puissance du signal d'interrogation reçu par le transpondeur 8L est directement liée à sa distance de propagation (la puissance d'un signal diminue avec sa distance de propagation), le principe mis en oeuvre derrière l'étape de détermination E3 revient à déterminer la distance de l'aéronef intrus I à l'aéronef meneur L et à comparer cette dernière à une portée prédéterminée C, puis de déterminer que l'aéronef intrus I est éligible à recevoir le au moins un paramètre de vol demandé s'il se trouve à une distance inférieure ou égale à la portée prédéterminée C, ou que l'aéronef intrus n'est pas éligible sinon. En prenant l'exemple d'une puissance seuil de -62 dBm, la portée prédéterminée C est d'environ 3nm = 5,55 km.

- dans un étape de transmission E4, le transpondeur 8L de l'aéronef meneur L envoie, via l'antenne de transpondeur 9L, un signal réponse à l'interrogateur de l'aéronef intrus I éligible, sur 1090 MHz par exemple, en réponse au signal d'interrogation de l'aéronef intrus I. Le signal réponse consiste en une série d'impulsions qui contiennent des identifiants de l'aéronef meneur L et le au moins un paramètre de vol de l'aéronef meneur L demandé par l'aéronef intrus I à l'étape d'interrogation E1.

En revanche, si l'aéronef intrus n'est pas éligible, le transpondeur 8L de l'aéronef meneur L ne transmet aucun paramètre de vol de l'aéronef meneur L en réponse à la demande de l'aéronef intrus I. Par exemple, le transpondeur 8L n'envoie pas de signal réponse au signal d'interrogation d'un aéronef intrus I non éligible.

- dans une étape de réception E5, l'aéronef intrus I éligible reçoit le signal réponse qui est traité par l'interrogateur 6I. Par la connaissance du ou des paramètres de vol de l'aéronef meneur L, le système de gestion de vol 4I de l'aéronef intrus est capable de calculer la position de centre de tourbillons de sillage 14L, 15L générés par l'aéronef meneur L et/ou la force de circulation desdits tourbillons.

La position des centres des tourbillons est obtenue par le calcul de la vitesse de descente Wv desdits tourbillons qui est, par exemple, calculée avec la relation suivante :

$$w_v = \frac{m \cdot g \cdot n_z}{2 \cdot \pi \cdot \rho \cdot V \cdot b_v{}^2}$$

La force de circulation Γ est, par exemple, calculée avec la relation suivante :

$$\Gamma = \frac{m \cdot g \cdot n_z}{\rho \cdot V \cdot b_v}$$

où

m la masse de l'aéronef générant les tourbillons (kg)
g l'accélération de la pesanteur (9.81m/s[2])
ρ la densité de l'air au point de vol (kg.m-3)

V la vitesse de l'aéronef générant les tourbillons (m.s-1)
bv l'espacement entre les 2 vortex (m) = envergure de l'aéronef générant les tourbillons
nz le facteur de charge subi par l'aéronef (g).
φ l'angle de roulis de l'aéronef générant les tourbillons (deg)

La masse est le seul paramètre de vol qui ne peut pas être estimé et dont la connaissance est nécessaire pour que le système de gestion de vol 4I de l'aéronef intrus I puisse calculer des données relatives aux tourbillons de sillage de l'aéronef meneur 14L, 15L via, par exemple, les formules mentionnées ci-dessus. Par conséquent, pour calculer des données relatives aux tourbillons de sillage de l'aéronef meneur 14L, 15L, le signal d'interrogation de l'aéronef intrus I, émis à l'étape d'interrogation E1, contient au minimum la demande de la masse.

Les autres paramètres de vol de l'aéronef meneur L, comme la vitesse, peuvent quant à eux être obtenus par l'analyse des signaux d'interrogation/réponse échangés durant la communication de données entre les systèmes d'évitement de collision de type TCAS 5L, 5I de l'aéronef meneur L et de l'aéronef intrus I, être estimés (cas de l'envergure ou le facteur de charge) ou peuvent être mesurés par des capteurs de l'aéronef intrus I (cas de l'accélération de la pesanteur, la densité de l'air au point de vol, l'angle de roulis).

La suite d'étapes décrite ci-dessus est recommencée à chaque nouvelle réception d'un signal d'interrogation par le transpondeur 8L de l'aéronef meneur L.

L'un des avantages de l'invention est de limiter l'envoi de paramètres de vol de l'aéronef meneur L à des aéronefs intrus I se trouvant en deçà de la portée prédéterminée C (figures 4 et 5) de l'aéronef meneur L. Il est ainsi possible de transmettre un paramètre de vol de l'aéronef meneur L à un aéronef intrus éligible sans dépasser la capacité de la bande passante de la communication automatisée puisque seul un nombre restreint d'aéronefs est éligible à recevoir un paramètre de vol de l'aéronef meneur L.

Avantageusement, à l'étape de transmission E4, lorsque l'aéronef intrus I n'est pas éligible, le transpondeur 8L de l'aéronef meneur envoie un signal réponse au signal d'interrogation de l'aéronef intrus I, ce signal réponse contient une indication selon laquelle la demande de l'aéronef intrus I à obtenir au moins un paramètre de vol est refusée.

Dans une variante de l'invention, afin que les paramètres de vol de l'aéronef meneur L soient uniquement disponibles à un avion intrus I éligible à recevoir des paramètres de vol de l'aéronef meneur L, l'onde du signal réponse émise par le transpondeur 8L de l'aéronef meneur L à l'étape de transmission E4 est émise à une puissance limitée de sorte qu'elle ne puisse pas se propager au-delà d'une distance supérieure à la portée prédéterminée C, à une marge d'erreur près de sorte à tenir compte de conditions de propagation d'onde défavorables. La puissance d'émission est avantageusement sensiblement identique (à 5 % près) à la puissance du signal d'interrogation déterminée par le processeur 30 du transpondeur 8L à la sous-étape d'analyse E3a.

Cette variante est avantageuse en ce qu'elle permet de s'assurer que les paramètres de vol transmis à l'aéronef intrus I ne sont pas interceptés par un individu malintentionné.

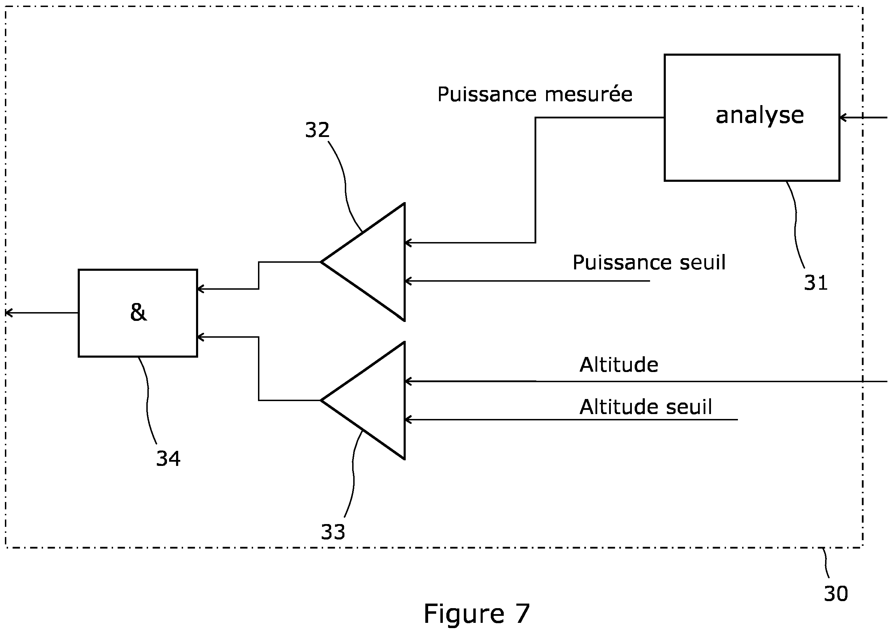

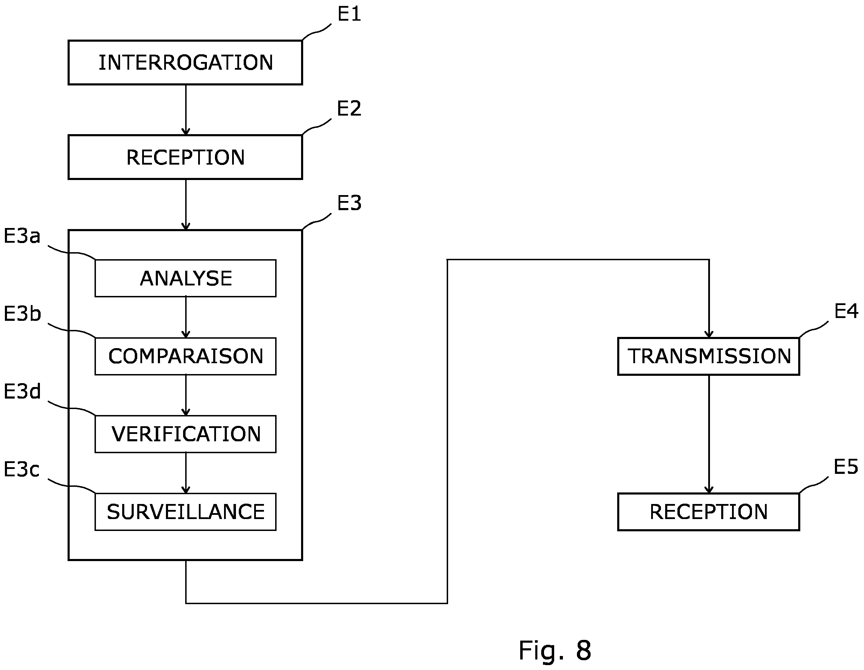

Selon un autre mode de réalisation, afin de s'assurer que les paramètres de vol de l'aéronef meneur L transmis à l'aéronef intrus I ne puissent pas être interceptés par un individu, notamment par un individu au sol, et en relation avec les figures 7 et 8, le transpondeur 8L détermine que l'aéronef intrus I est éligible si la puissance du signal d'interrogation est supérieure ou égale à la puissance seuil et si l'altitude de l'aéronef meneur est supérieure ou égale à une altitude seuil, et n'est pas éligible sinon.

L'altitude seuil est par exemple de 20000 pieds (correspondant au niveau de vol/flight level FL200) égal à environ 6000 m.

Selon cette variante, le transpondeur 8L comprend un comparateur 33 pour comparer l'altitude de l'aéronef meneur à l'altitude seuil et une porte logique ET 34 recevant en entrée le signal de sortie du comparateur 32 comparant la puissance du signal d'interrogation à la puissance seuil ainsi que le signal de sortie du comparateur 33 comparant l'altitude de l'aéronef meneur à l'altitude seuil.

Le procédé tel que décrit plus haut est modifié :

- en ce que, l'étape de détermination E3 comprend une sous-étape de vérification E3d, mise en oeuvre avant la sous-étape de surveillance et de détermination E3c, dans laquelle le processeur 30 du transpondeur 8L de l'aéronef meneur L met en oeuvre, via le comparateur 33, une comparaison entre l'altitude de l'aéronef meneur L et l'altitude seuil. Le signal de sortie du comparateur 33 passe d'un premier à un second état (par exemple de 0 à 1) si l'altitude de l'aéronef meneur est supérieure ou égale à l'altitude seuil, il conserve un premier état (par exemple 0) sinon ; et

- et en ce que dans la sous-étape de surveillance et de détermination E3c, le transpondeur détermine que:

  • l'aéronef intrus I est éligible si le signal de sortie de la porte logique ET 34 passe dans le second état (par exemple mise à 1) ce qui correspond à un changement d'état du signal de sortie du comparateur 32 comparant la puissance du signal d'interrogation à la puissance seuil ET un changement d'état du signal de sortie du comparateur 33 comparant l'altitude de l'aéronef meneur à l'altitude seuil
  • l'aéronef intrus n'est pas éligible si, le signal de sortie de la porte logique ET 34 reste dans le premier état (par exemple 0), c'est-à-dire que ni le signal de sortie du comparateur 32 comparant la puissance du signal d'interrogation à la puissance seuil n'a changé d'état ni le signal de sortie du comparateur 33 comparant l'altitude de l'aéronef meneur à l'altitude seuil n'a changé d'état.

Dans une variante de l'invention, au lieu de mesurer la puissance du signal d'interrogation reçu, le processeur 30 du transpondeur 8L analyse le rapport signal à bruit (c.-à-d. la qualité du signal) du signal d'interrogation reçu et compare ce rapport à un seuil prédéterminé. La mesure de la qualité du signal d'interrogation reçu permet déterminer la distance de l'avion intrus I à l'aéronef meneur L.

## Revendications

1. Procédé de transmission de paramètres de vol d'un aéronef meneur (L) vers au moins un aéronef intrus (I), chaque aéronef (L,I) comprenant :

   - un système d'évitement de collision (5L, 5I) configuré pour détecter des probabilités de collisions avec d'autres aéronefs volant dans un volume de surveillance réparti autour de l'aéronef (L, I), ledit système comprenant un interrogateur (6L, 6I), et un transpondeur (8L, 8I) connecté à une antenne (9L, 9I);
   - un système de gestion de vol (4L, 4I) collectant les paramètres de vol de l'aéronef (L,I), le système d'évitement de collision étant connecté au système de gestion de vol ;

   **caractérisé en ce que** le procédé comprend les étapes successives suivantes :

   - d'interrogation (E1), dans laquelle l'interrogateur (6I) de l'aéronef intrus (I) émet un signal d'interrogation comprenant une demande d'au moins un paramètre de vol;
   - réception (E2), dans laquelle le transpondeur (8L) de l'aéronef meneur (L) reçoit, via l'antenne (9L, 9I), le signal d'interrogation émis par l'interrogateur (6I) de l'aéronef intrus (I) ;
   - de détermination (E3), dans laquelle le transpondeur (8L) de l'aéronef meneur:

     • dans une sous-étape d'analyse (E3a), analyse le spectre du signal d'interrogation reçu et détermine la puissance dudit signal;
     • dans une sous-étape de comparaison (E3b), compare la puissance du signal d'interrogation reçu à une puissance seuil ; et
     • dans une sous-étape de surveillance et de détermination (E3c), détermine que l'aéronef intrus est éligible à recevoir le au moins un paramètre de vol demandé si la puissance du signal d'interrogation est supérieure ou égale à la puissance seuil, et détermine que l'aéronef intrus n'est pas éligible à recevoir le au moins un paramètre de vol sinon.

- transmission (E4), dans laquelle le transpondeur (8L) de l'aéronef meneur (L) envoie un signal réponse à l'interrogateur (6I) d'un aéronef intrus (I) éligible en réponse au signal d'interrogation, le signal réponse contenant le au moins un paramètre de vol de l'aéronef meneur (L) demandé par l'aéronef intrus (I) lors de l'étape d'interrogation (E1), un aéronef intrus (I) non éligible ne recevant au contraire aucun paramètre de vol de l'aéronef meneur (L) en réponse à sa demande.

2. Procédé selon la revendication 1, **caractérisé en ce qu'**un paramètre de vol est une donnée choisie parmi les données suivantes : altitude, masse, angle de roulis, configuration aérodynamique, envergure de l'aéronef, densité de l'air au point de vol, vitesse.

3. Procédé selon l'une quelconque des revendications 1 ou 2, **caractérisé en ce que** ;

- l'étape de détermination (E3) comprend une sous-étape de vérification (E3d), mise en oeuvre avant la sous-étape de surveillance et de détermination (E3c), dans laquelle le transpondeur (8L) de l'aéronef meneur (L) compare l'altitude de l'aéronef meneur (L) à une altitude seuil ;

et **en ce que** :

- dans la sous-étape de surveillance et de détermination (E3c), le transpondeur (8L) de l'aéronef meneur détermine que l'aéronef intrus (I) est éligible à recevoir le au moins un paramètre de vol demandé si la puissance du signal d'interrogation est supérieure ou égale à la puissance seuil et si l'altitude de l'aéronef meneur (L) est supérieure ou égale à l'altitude seuil, et que l'aéronef intrus (I) n'est pas éligible sinon.

4. Procédé selon l'une quelconque des revendications 1 ou 3, **caractérisé en ce qu'**à l'étape de transmission (E4), l'interrogateur (6I) d'un aéronef intrus (I) non éligible reçoit du transpondeur (8L) de l'aéronef meneur (L) un signal réponse au signal d'interrogation, le signal réponse contenant une indication selon laquelle la demande de l'aéronef intrus (I) à obtenir au moins un paramètre de vol est refusée.

Fig. 1

4L,4I

6L,6I

8L,8I

5L,5I

7L,7I

9L,9I

Fig. 2

Figure 3

Figure 7

Fig. 4

Fig. 5

Fig. 6

Fig. 8

**EP 3 396 651 A1**

Europäisches
Patentamt

European
Patent Office

Office européen
des brevets

# RAPPORT DE RECHERCHE EUROPEENNE

Numéro de la demande

EP 18 16 4291

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | EP 2 851 889 A2 (HONEYWELL INT INC [US]) 25 mars 2015 (2015-03-25) * abrégé * * alinéa [0035] * * alinéa [0038] * * alinéa [0046] * * revendications 1-3, 9-11 * * figures 1, 4 * ----- | 1-4 | INV. G08G5/00 G05D1/10 G08G5/04 |
| Y | WO 2004/029902 A1 (AVIAT COMM & SURVEILLANCE SYS [US]) 8 avril 2004 (2004-04-08) * alinéa [0005] - alinéa [0006] * * alinéa [0010] * * alinéa [0069] * * alinéa [0071] * * alinéa [0094] * ----- | 1-4 | |

DOMAINES TECHNIQUES RECHERCHES (IPC)

G08G
G05D
G01S

Le présent rapport a été établi pour toutes les revendications

| Lieu de la recherche | Date d'achèvement de la recherche | Examinateur |
|---|---|---|
| La Haye | 17 septembre 2018 | Renaudie, Cécile |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................................
& : membre de la même famille, document correspondant

EPO FORM 1503 03.82 (P04C02)

15

**ANNEXE AU RAPPORT DE RECHERCHE EUROPEENNE
RELATIF A LA DEMANDE DE BREVET EUROPEEN NO.**

EP 18 16 4291

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-09-2018

| Document brevet cité au rapport de recherche | | | Date de publication | Membre(s) de la famille de brevet(s) | | | Date de publication |
|---|---|---|---|---|---|---|---|
| EP 2851889 | A2 | | 25-03-2015 | CN | 104457782 | A | 25-03-2015 |
| | | | | EP | 2851889 | A2 | 25-03-2015 |
| | | | | US | 2015088342 | A1 | 26-03-2015 |
| WO 2004029902 | A1 | | 08-04-2004 | AT | 399360 | T | 15-07-2008 |
| | | | | AU | 2003279098 | A1 | 19-04-2004 |
| | | | | CA | 2500477 | A1 | 08-04-2004 |
| | | | | EP | 1554707 | A1 | 20-07-2005 |
| | | | | US | 2003137444 | A1 | 24-07-2003 |
| | | | | WO | 2004029902 | A1 | 08-04-2004 |

EPO FORM P0460

Pour tout renseignement concernant cette annexe : voir Journal Officiel de l'Office européen des brevets, No.12/82